# EUROPEAN PATENT APPLICATION

(11) **EP 3 904 130 A1**
(43) Date of publication of application: **03.11.2021**
(21) Application number: 21171321.9
(22) Date of filing: 29.04.2021
(51) Int. Cl.: B60G 3/20, B60K 17/30, B60T 1/06

(54) **BRAKE SYSTEM FOR FRONT PORTAL DRIVETRAIN ASSEMBLY**

(30) Priority: 29.04.2020 US 202063017223 P; 27.04.2021 US 202117241359
(71) Applicant: Gordon, Robby, Charlotte, NC 28269 (US)
(72) Inventor: Gordon, Robby, Charlotte, NC 28269 (US)
(74) Representative: Dehns

(57) **Abstract**

An apparatus and methods are provided for a braking system for a front portal drivetrain assembly to improve the mechanical strength and performance of vehicle drivetrains. The braking system includes a brake caliper coupled with a drivetrain and a brake disc coupled to a drive axle such that a periphery of the brake disc passes within the brake caliper. A front portal spindle assembly includes a pinion gear assembly and an output gear assembly that provide a gear reduction at a front wheel of the vehicle. Upon activation of the braking system, the brake caliper applies pressure to the brake disc to slow rotation of the drive axle while the gear reduction at the front wheel contributes to engine braking during deceleration of the vehicle. The gear reduction of the front portal spindle assembly facilitates reducing the size of the brake caliper, the brake disc, or a combination thereof.

## Description

### PRIORITY

This application claims the benefit of and priority to U.S. Provisional Application, entitled "Brake System For Front Portal Drivetrain Assembly," filed on April 29, 2020 and having application serial number 63/017,223.

### FIELD

Embodiments of the present disclosure generally relate to the field of vehicle braking systems. More specifically, embodiments of the disclosure relate to an apparatus and methods for a braking system for a front portal drivetrain assembly configured to improve the mechanical strength and performance of off-road drivetrains.

### BACKGROUND

A double wishbone suspension is a well-known independent suspension design using upper and lower wishbone-shaped arms to operably couple a front wheel of a vehicle. Typically, the upper and lower wishbones or suspension arms each has two mounting points to a chassis of the vehicle and one mounting joint at a spindle assembly or knuckle. A shock absorber and a coil spring may be mounted onto the wishbone to control vertical movement of the front wheel. The double wishbone suspension facilitates control of wheel motion throughout suspension travel, including controlling such parameters as camber angle, caster angle, toe pattern, roll center height, scrub radius, scuff, and the like.

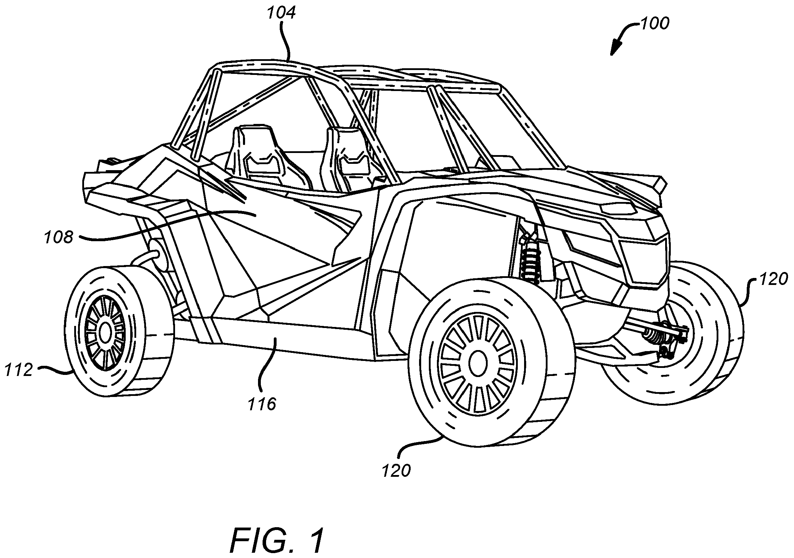

Double wishbone suspensions may be used in a wide variety of vehicles, including heavy-duty vehicles, as well as many off-road vehicles, as shown in Fig. 1. Figure 1 shows an off-road vehicle 100 that is of a Side by Side variety. The Side by Side is a four-wheel drive off-road vehicle that typically seats between two and six occupants and is sometimes referred to as a Utility Task Vehicle (UTV), a Recreational Off-Highway Vehicle (ROV), or a Multipurpose Off-Highway Utility Vehicle (MOHUV). In addition to the side-by-side seating arrangement, many UTVs have seat belts and roll-over protection, and some may have a cargo box at the rear of the vehicle. A majority of UTVs come factory equipped with hard tops, windshields, and cab enclosures.

The double-wishbone suspension often is referred to as "double A-arms," although the arms may be A-shaped, L-shaped, J-shaped, or even a single bar linkage. In some embodiments, the upper arm may be shorter than the lower arm so as to induce negative camber as the suspension jounces (rises). Preferably, during turning of the vehicle, body roll imparts positive camber gain to the lightly loaded inside wheel, while the heavily loaded outer wheel gains negative camber.

The spindle assembly, or knuckle, is coupled between the outboard ends of the upper and lower suspension arms. In some designs, the knuckle contains a kingpin that facilitates horizontal radial movement of the wheel, and rubber or trunnion bushings for vertical hinged movement of the wheel. In some relatively newer designs, a ball joint may be disposed at each outboard end to allow for vertical and radial movement of the wheel. A bearing hub, or a spindle to which wheel bearings may be mounted, may be coupled with the center of the knuckle.

Constant velocity (CV) joints allow pivoting of the suspension arms and the spindle assembly, while a drive shaft coupled to the CV joint delivers power from a transaxle to the wheels. Although CV joints are typically used in front wheel drive vehicles, off-road vehicles such as four-wheeled buggies comprise CV joints at all wheels. Constant velocity joints typically are protected by a rubber boot and filled with molybdenum disulfide grease.

Given that off-road vehicles routinely travel over very rough terrain, such as mountainous regions, there is a desire to improve the mechanical strength and performance of off-road drivetrain and suspension systems, while at the same reducing the mechanical complexity of such systems.

### SUMMARY

An apparatus and methods are provided for a braking system for a front portal drivetrain assembly to improve the mechanical strength and performance of vehicle drivetrains. The braking system includes a brake caliper coupled with a drivetrain and a brake disc coupled to a drive axle such that a periphery of the brake disc passes within the brake caliper. A front portal spindle assembly includes a pinion gear assembly and an output gear assembly that provide a gear reduction at a front wheel of the vehicle. Upon activation of the braking system, the brake caliper applies pressure to the brake disc to slow rotation of the drive axle while the gear reduction at the front wheel contributes to engine braking during deceleration of the vehicle. The gear reduction of the front portal spindle assembly facilitates reducing the size of the brake caliper, the brake disc, or a combination thereof.

In an exemplary embodiment, a braking system for a front portal drivetrain assembly of a vehicle comprises: a brake caliper coupled with a drivetrain; a brake disc coupled to a drive axle; and a front portal spindle assembly.

In another exemplary embodiment, the brake caliper is fastened onto a modular chassis comprising the drivetrain such that the brake disc passes through the brake caliper. In another exemplary embodiment, the brake disc is coupled to the drive axle such that a periphery of the brake disc passes within the brake caliper. In another exemplary embodiment, the brake caliper is configured to apply pressure to the brake disc upon activation of the braking system so as to slow rotation of the drive axle. In another exemplary embodiment, the brake disc is coupled with a hub comprising the front differential. In another exemplary embodiment, the brake disc is coupled with a constant velocity joint that is coupled with the hub of the front differential.

In another exemplary embodiment, the front portal spindle assembly includes a pinion gear assembly and an output gear assembly that provide a gear reduction at the wheel. In another exemplary embodiment, the front portal spindle assembly contributes to engine braking during deceleration of the vehicle. In another exemplary embodiment, the front portal spindle assembly facilitates utilizing a relatively small brake caliper, a relatively small brake disc, or a combination thereof.

In an exemplary embodiment, a method for a braking system of a vehicle comprises: incorporating a front portal spindle assembly into a drivetrain of the vehicle; fastening a brake caliper to the drivetrain; and coupling a brake disc with a drive axle comprising the drivetrain.

In another exemplary embodiment, incorporating the front portal spindle assembly includes providing a gear reduction at a wheel coupled with the front portal spindle assembly. In another exemplary embodiment, providing the gear reduction includes configuring the front portal spindle assembly to contribute to engine braking during deceleration of the vehicle. In another exemplary embodiment, configuring the front portal spindle assembly includes utilizing a relatively small brake caliper, a relatively small brake disc, or a combination thereof.

In another exemplary embodiment, fastening the brake caliper includes fastening the brake caliper to a modular chassis comprising the drivetrain such that the brake disc passes through the brake caliper. In another exemplary embodiment, fastening the brake caliper includes mounting the brake caliper between a transaxle and the front portal spindle assembly. In another exemplary embodiment, fastening the brake caliper includes causing a periphery of the brake disc to pass through the brake caliper such that the brake caliper applies pressure to the brake disc upon activation of the braking system to slow rotation of the drive axle.

In another exemplary embodiment, coupling the brake disc includes coupling the brake disc with a hub comprising the front differential. In another exemplary embodiment, coupling includes coupling the brake disc with a constant velocity joint that is coupled with the hub of the front differential.

These and other features of the concepts provided herein may be better understood with reference to the drawings, description, and appended claims.

### BRIEF DESCRIPTION OF THE DRAWINGS

The drawings refer to embodiments of the present disclosure in which:
Figure 1 illustrates an exemplary embodiment of an off-road vehicle that is particularly suitable for implementation of a braking system for a front portal drivetrain assembly in accordance with the present disclosure;
Figure 2 illustrates an upper perspective view of a driver-side portion of a front portal drivetrain that includes an exemplary embodiment of a braking system according to the present disclosure;
Figure 3 illustrates a front view of the front portal drivetrain and the exemplary embodiment of the braking system shown in Fig. 2; and
Figure 4 illustrates a front view of an exemplary embodiment of a front portal spindle assembly that is configured to couple a front wheel with a driver side of a vehicle, according to the present disclosure.

While the present disclosure is subject to various modifications and alternative forms, specific embodiments thereof have been shown by way of example in the drawings and will herein be described in detail. The invention should be understood to not be limited to the particular forms disclosed, but on the contrary, the intention is to cover all modifications, equivalents, and alternatives falling within the scope of the invention as defined by the claims.

### DETAILED DESCRIPTION

In the following description, numerous specific details are set forth in order to provide a thorough understanding of the present disclosure. It will be apparent, however, to one of ordinary skill in the art that the invention disclosed herein may be practiced without these specific details. In other instances, specific numeric references such as "first joint," may be made. However, the specific numeric reference should not be interpreted as a literal sequential order but rather interpreted that the "first joint" is different than a "second joint." Thus, the specific details set forth are merely exemplary. The specific details may be varied from and still be contemplated to be within the scope of the invention as defined by the claims. The term "coupled" is defined as meaning connected either directly to the component or indirectly to the component through another component. Further, as used herein, the terms "about," "approximately," or "substantially" for any numerical values or ranges indicate a suitable dimensional tolerance that allows the part or collection of components to function for its intended purpose as described herein.

A double wishbone suspension generally comprises upper and lower suspension arms that operably couple a front wheel of a vehicle. The upper and lower suspension arms each typically include two mounting points to a chassis of the vehicle and one mounting joint at a spindle assembly. The spindle assembly is coupled between the outboard ends of the upper and lower suspension arms and is configured to allow vertical and horizontal radial movement of a wheel coupled with the spindle assembly. Constant velocity (CV) joints allow pivoting of the suspension arms and the spindle assembly, while a drive shaft coupled to the CV joint conveys power from a transaxle to the wheel. Given that off-road vehicles routinely travel over very rough terrain, such as mountainous regions, there is a desire to improve the mechanical strength and performance of off-road drivetrain and suspension systems, while at the same reducing the mechanical complexity of such systems. Embodiments of the disclosure provide an apparatus and methods for a braking system for a front portal drivetrain assembly that is configured to improve the mechanical strength and performance of off-road drivetrains.

Figure 1 shows an off-road vehicle 100 that is particularly suitable for implementation of a braking system for a front portal drivetrain assembly according to the present disclosure. The off-road vehicle 100 generally is of a Utility Task Vehicle (UTV) variety that seats two occupants, includes a roll-over protection system 104, and may have a cab enclosure 108. Rear wheels 112 of the off-road vehicle 100 may be operably coupled with a chassis 116 by way of a trailing arm suspension system. Front wheels 120 may be operably coupled with the chassis 116 by way of a front suspension system and a spindle assembly. It should be understood, however, that the braking system disclosed herein is not to be limited to the off-road vehicle 100, but rather the braking system may be incorporated into a wide variety of vehicles, other than UTVs, without limitation.

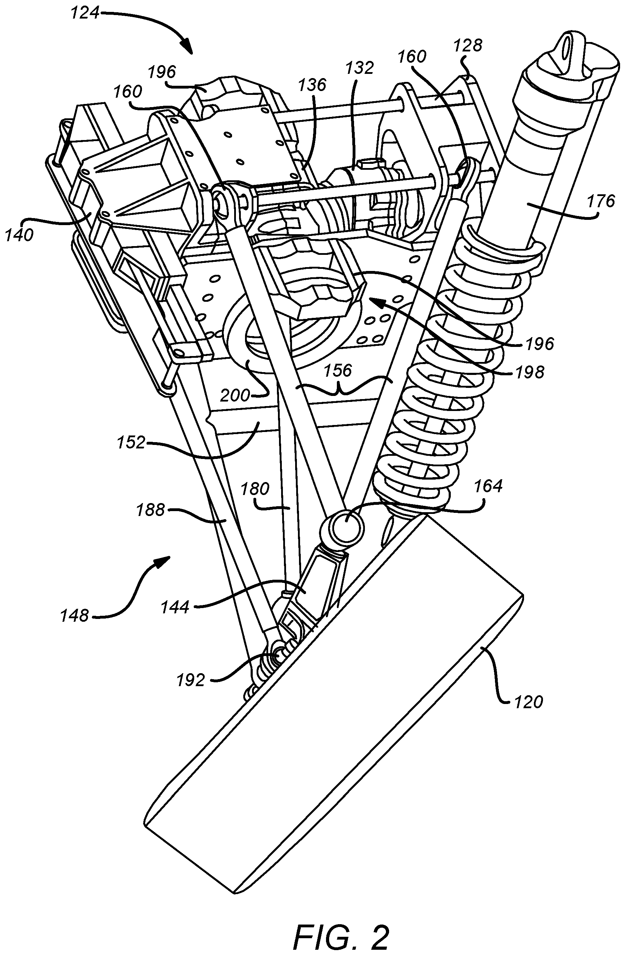

Figure 2 illustrates an upper perspective view of a driver-side portion of a front portal drivetrain 124 that may be implemented in the off-road vehicle 100. The drivetrain 124 includes an exemplary embodiment of a braking system according to the present disclosure, as described hereinbelow. The illustrated embodiment of the drivetrain 124 is of a modular variety of drivetrain that includes a modular chassis 128 that supports a transaxle 132, a front differential 136, and a steering gear 140 that are operably coupled with a front portal spindle assembly 144 and the front wheel 120 by way of a front suspension system 148. The modular chassis 128 provides mounting points for the front suspension 148, in lieu of conventional mounting points that comprise portions of the chassis 116 of the vehicle. As such, the illustrated drivetrain 124 comprises a single drivetrain/suspension assembly that may be installed onto and removed from the vehicle 100, unlike a conventional drivetrain and suspension that comprise multiple components that must be individually assembled onto the chassis 116 of the vehicle.

Although the braking system disclosed herein is described and illustrated in connection with a modular embodiment of the front portal drivetrain 124, it should be borne in mind that the braking system of the present disclosure is not limited to modular drivetrains, but rather the braking system may be implemented in a wide variety of different drivetrains, including rear drivetrains, as well as various on-road vehicle drivetrains, without limitation. However, details pertaining specifically to modular front drivetrains are disclosed in U.S. Provisional Application, entitled "Modular Front Drivetrain Assembly," filed on September 14, 2019 and having application serial number 62/900,481.

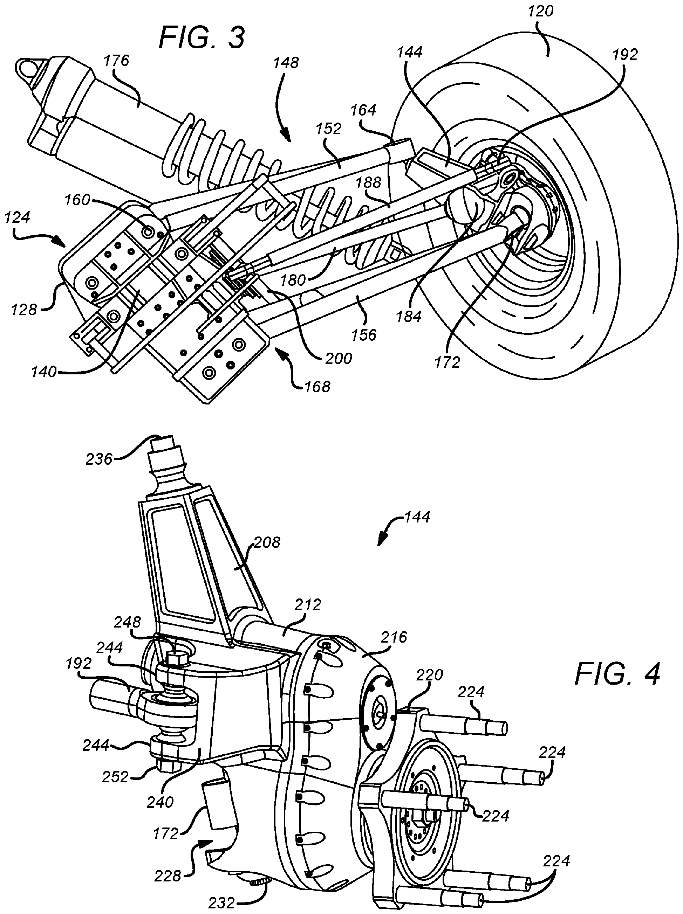

As shown in Fig. 2, the front suspension system 148 includes an upper control arm (UCA) 152 and a lower control arm (LCA) 156 that couple the front portal spindle assembly 144 and the front wheel 120 with the modular chassis 128. The UCA 152 comprises two inboard UCA joints 160 that couple the UCA 152 to the modular chassis 128 and an outboard UCA joint 164 that couples the UCA 152 to the front portal spindle assembly 144. As best shown in Fig. 3, the LCA 156 includes two inboard LCA joints 168 that couple the LCA 156 to the modular chassis 128 and an outboard LCA joint 172 that couples the LCA 156 to the front portal spindle assembly 144. As will be recognized, the UCA and LCA 152, 156 generally are of a double wishbone variety of suspension that facilitates vertical motion of the front wheel 120 during travel over terrain, as well as facilitating horizontal motion of the front wheel 120 during steering of the vehicle 100 by way of the steering gear 140. The UCA and LCA 152, 156 further facilitate controlling various parameters affecting the orientation of the front wheel 120 with respect to the off-road vehicle 100, such as, by way of non-limiting example, camber angle, caster angle, toe pattern, roll center height, scrub radius, and scrub.

It should be understood that although the front suspension system 148 is disclosed specifically in connection with the driver-side of the off-road vehicle 100, a passenger-side front suspension system is to be coupled with a passenger side of the modular chassis 128. It should be further understood that the passenger-side front suspension system is substantially identical to the driver-side front suspension system 148, with the exception that the passenger-side front suspension system is configured specifically to operate with the passenger-side of the modular chassis 128. As will be appreciated, therefore, the passenger-side front suspension system and the driver-side front suspension system 148 may be configured as reflections of one another across a longitudinal midline of the off-road vehicle 100.

As shown in Figs. 2-3, a strut 176 that is comprised of a shock absorber and a coil spring is mounted to the LCA 156 by way of a lower pivot (not shown). A top of the strut 176 may be coupled to an upper pivot (not shown) that may be disposed on the chassis 116 of the vehicle 100. The strut 176 is configured to dampen vertical motion of the front suspension system 148 due to movement of the front wheel 120 as the vehicle 100 travels over terrain. The UCA 152 may be suitably configured, such as in the form of a J-arm, so as to facilitate coupling the strut 176 between the LCA 156 and the chassis 116 (see Fig. 1) of the vehicle 100 in lieu of being coupled between the UCA 152 and the chassis 116. Moreover, in some embodiments, the strut 176 may be coupled between the LCA 156 and the modular chassis 128.

As best shown in Fig. 2, a drive axle 180 is coupled between the front wheel 120 and the front differential and transaxle 136, 132. The drive axle 180 is configured to conduct torque from the transaxle 132 to the front wheel 120 and accommodate vertical pivoting motion of the front suspension system 148 in response to road conditions. As best shown in Fig. 3, the drive axle 180 includes a constant velocity (CV) joint 184 that is coupled with the front portal spindle assembly 144. The CV joint 184 enables uninterrupted torque transmission from the transaxle 132 to the front wheel 120 during vertical pivoting of the front suspension assembly 148 due to road conditions.

In the embodiment illustrated in Figs. 2-3, a steering rod 188 couples the front portal spindle assembly 144 with the steering gear 140 disposed on the modular chassis 128. The steering rod 188 may be coupled with the front portal spindle assembly 144 by way of a steering rod-end joint 192 that is similar to the inboard UCA joints 160. In some embodiments, therefore, the steering rod-end joint 192 may be of a Heim-joint variety or a bushing variety. As will be appreciated, the steering rod-end joint 192 allows vertical and horizontal rotational motion of the front portal spindle assembly 144 during operation of the vehicle 100.

Moreover, the steering rod-end joint 192 may be coupled with the front portal spindle assembly 144 forward of the drive axle 180, thereby providing a leading-edge steering system to the vehicle 100. Experimentation has demonstrated that the leading-edge steering system shown in Figs. 2-3 advantageously decreases leverage of the front wheel 120 on the steering rod-end joint 192 and the steering rod 188, thereby substantially eliminating bump steer that may occur due to forces exerted on the front wheel 120 by rough terrain. Details pertaining to leading-edge steering systems are disclosed in U.S. Patent Application Serial No. 15/625,813, entitled "Leading-Edge Steering Assembly," filed on June 16, 2017. Further, details pertaining to rod-end joints are disclosed in above-mentioned U.S. Patent Application Serial No. 15/625,692, which is entitled "Rod-End Front Suspension."

As best shown in Fig. 2, a braking system 198 may be coupled with the drivetrain 124 and configured to enable a practitioner to slow the rotation rate of the front wheel 120 during operation of the vehicle 100. In the illustrated embodiment of Figs. 2-3, the braking system 198 comprises a brake caliper 196 that is fastened onto the modular chassis 128. In some embodiments, the brake caliper 196 may be fastened directly onto the transaxle 132 or the front differential 136. A brake disc 200 is coupled to the drive axle 180 such that a periphery of the brake disc 200 passes within the brake caliper 196. As will be recognized, when the practitioner depresses a brake pedal of the vehicle 100 the brake caliper 196 applies pressure to the brake disc 200, thus slowing the rotation rate of the front wheel 120. The brake caliper 196 may be cable operated or may be operated by way hydraulic lines. Although not shown in Figs. 2-3, the brake disc 200 may be coupled with a hub comprising the front differential 136. In some embodiments, however, the brake disc 200 may be coupled with a constant velocity joint that is coupled with the hub of the front differential 136. It is contemplated that the brake caliper 196 and the brake disc 200 may be incorporated into the drivetrain 124 in a wide variety of configurations, without limitation, and without deviating beyond the scope of the present disclosure.

Turning now to Fig. 4, a front view of the front portal spindle assembly 144 is shown. The front portal spindle assembly 144 generally is configured to couple the front wheel 120 with the driver-side of the off-road vehicle 100. The front portal spindle assembly 144 (hereinafter, "spindle assembly 144") includes a spindle portion 208 and an inboard case 212 that are coupled with an outboard case 216. The inboard case 212 and the outboard case 216 cooperate to support a pinion gear assembly and an output gear assembly that are configured to communicate torque from the transaxle 132 to the front wheel 120. A wheel hub 220 and multiple wheel studs 224 facilitate coupling the front wheel 120 with the output gear assembly. Specific details pertaining to the pinion gear assembly and the output gear assembly, as well as further details regarding the operation of the front portal spindle assembly 144, are disclosed in U.S. Provisional Application, entitled "Front Portal Spindle Assembly," filed on August 23, 2019 and having application serial number 62/891,074.

The spindle portion 208 and the inboard case 212 are configured for being rotatably coupled with the UCA and LCA 152, 156 comprising the front suspension system 148. The inboard case 212 includes a lower opening 228 that is configured to receive the outboard LCA joint 172 for coupling the front portal spindle assembly 144 with the LCA 156. The lower opening 228 is configured to receive a lower connecting arm bolt 232 for mounting the LCA joint 172 within the lower opening 228. Further, the spindle portion 208 includes an upper mounting hole (not shown) configured to receive a misalignment spacer 236 for coupling the front portal spindle assembly 144 with the UCA 152. The misalignment spacer 236 comprises the outboard UCA joint 164 (see Fig. 3) that couples the UCA 152 to the front portal spindle assembly 144.

As mentioned hereinabove, the UCA joint 164 and the LCA joint 172 accommodate horizontal rotation of the front portal spindle assembly 144 due to steering the vehicle 100. As shown in Fig. 3, the steering rod-end joint 192 couples the steering rod 188 to the front portal spindle assembly 144. In the embodiment of the front portal spindle assembly 144 shown in Fig. 4, the front portal spindle assembly 144 includes a leading-edge portion 240 that is configured for being rotatably coupled with the steering rod-end joint 192. The leading-edge portion 240 includes two parallel prongs 244 extending forward with respect to the spindle portion 208. The parallel prongs 244 are configured to fixedly receive a bolt 248 and a nut 252 that hingedly receives the steering rod-end joint 192, such that moving the steering rod-end joint 192 rotates the front portal spindle assembly 144 with respect to the UCA and LCA 152, 156, as described herein.

In general, the inboard case 212 and the outboard case 216 are configured to cooperate to support a pinion gear assembly and an output gear assembly that are configured to communicate torque from the transaxle 132 onboard the modular chassis 128 to the front wheel 120. The pinion gear assembly and the output gear assembly are housed within the inboard and outboard cases 212, 216 such that the pinion gear assembly is meshed with the output gear assembly. As such, torque applied to the pinion gear assembly is communicated to the output gear assembly. The pinion gear assembly is configured to be engaged with CV joint 184 (see Fig. 3) for communicating torque from the transaxle 132 onboard the modular chassis 128 to the pinion gear assembly. Further, the output gear assembly is engaged with the wheel hub 220. Thus, torque from the transaxle 132 may be communicated to the front wheel 120 by way of the pinion gear assembly and the output gear assembly.

In some embodiments, the gear assemblies comprising the front portal spindle assembly 144 may be configured to provide a gear reduction at the front wheel 120. Thus, the gear assemblies may be configured to generally reduce the torque exerted on the drivetrain 124 during operating the vehicle over rough terrain. In such embodiments, the sizes of the transaxle 132 and the front differential 136, as well as the modular chassis 128, may be relatively smaller than in absence of the gear reduction. Further, the gear reduction of the front portal spindle assembly 144 generally improves the performance of the braking system 198. As will be appreciated, the gear reduction of the front portal spindle assembly 144 generally contributes to engine braking that slows the vehicle 100 during deceleration independently of the braking system 198. It is contemplated, therefore, that the gear reduction of the front portal spindle assembly 144 generally facilitates using a smaller brake caliper 196 and/or brake disc 200. For example, in one embodiment, including the gear assemblies comprising the front portal spindle assembly 144 enables using a 10-inch diameter brake disc 200 instead of using a 12-inch diameter brake disc 200 in absence of the front portal spindle assembly 144. It is further contemplated that the contribution to slowing the speed of the vehicle 100 provided by engine braking may be taken into consideration during configuring the braking system 198; and as such, the front portal spindle assembly 144 may be viewed as comprising a portion of the braking system 198, without limitation.

It is to be understood that the braking system 198 disclosed herein is not to be limited to front drivetrains of vehicles 100, but rather the braking system 198 may be incorporated into rear drivetrains of vehicles 100, without limitation. For example, in some embodiments, the braking system 198 may be implemented in a vehicle 100 that includes a rear portal trailing arm assembly that includes portal gear assemblies similar to the front portal spindle assembly 144 discussed hereinabove. In some embodiments, the gear assemblies comprising the rear portal trailing arm may be configured to provide a gear reduction at a rear wheel 112 so as to reduce torque exerted on the rear drivetrain during operating the vehicle over rough terrain. It is contemplated, therefore, that the gear reduction of the rear portal trailing arm contributes to engine braking and thus generally improves braking performance. As such, the rear portal trailing arm facilitates reducing the size of the brake caliper 196 and/or brake disc 200, as described hereinabove, and without limitation. Further details pertaining to incorporating portal gears into rear trailing arms are disclosed in the above-mentioned U.S. Provisional Application, entitled "Front Portal Spindle Assembly".

It should be borne in mind that the braking system 198 and the front portal spindle assembly 144 are not limited to the specific embodiments illustrated in the drawings and described herein, but rather the braking system 198 and/or the front portal spindle assembly 144 may be varied in accordance with the specific type of the vehicle 100. It is contemplated that the braking system 198 and/or the front portal spindle assembly 144 may be implemented in any of various off-road vehicles 100, such as, by way of non-limiting example, Utility Task Vehicles (UTVs), Recreational Off-Highway Vehicles (ROVs), or Multipurpose Off-Highway Utility Vehicles (MOHUVs), without limitation. As such, the braking system 198 is particularly well-suited for off-road racing applications, such as desert racing, short course racing, hill climbing, rallying, and the like.

It is further contemplated that, in addition to the off-road applications discussed above, the braking system 198 and the front portal spindle assembly 144 may, in some embodiments, be incorporated into racing vehicles that are not necessarily intended for off-road racing. For example, the braking system 198 and the front portal spindle assembly 144 may be incorporated into racing vehicles that may be used for any of formula racing, sports car racing, stock car racing, drag racing, touring car racing, production car racing, as well as amateur open-wheel racing applications, such as karting, and the like, without limitation, and without deviating beyond the spirit and scope of the present disclosure.

While the invention has been described in terms of particular variations and illustrative figures, those of ordinary skill in the art will recognize that the invention is not limited to the variations or figures described. In addition, where methods and steps described above indicate certain events occurring in certain order, those of ordinary skill in the art will recognize that the ordering of certain steps may be modified and that such modifications are in accordance with the variations of the invention. Additionally, certain of the steps may be performed concurrently in a parallel process when possible, as well as performed sequentially as described above. To the extent there are variations of the invention, which are within the scope of the claims, it is the intent that this patent will cover those variations as well. Therefore, the present disclosure is to be understood as not limited by the specific embodiments described herein, but only by scope of the appended claims.

## Claims

1. A braking system for a front portal drivetrain assembly of a vehicle, the braking system comprising:
a brake caliper (196) coupled with a drivetrain (124);
a brake disc (200) coupled to a drive axle (132); and
a front portal spindle assembly (144).

2. The braking system of claim 1, wherein the brake caliper (196) is fastened onto a modular chassis (128) comprising the drivetrain such that the brake disc passes through the brake caliper.

3. The braking system of claim 1 or 2, wherein the brake disc is coupled to the drive axle such that a periphery of the brake disc passes within the brake caliper.

4. The braking system of any preceding claim, wherein the brake caliper is configured to apply pressure to the brake disc upon activation of the braking system so as to slow rotation of the drive axle.

5. The braking system of any preceding claim, wherein the brake disc is coupled with a hub comprising a front differential (136), and optionally wherein the brake disc is coupled with a constant velocity joint that is coupled with the hub of the front differential.

6. The braking system of any preceding claim, wherein the front portal spindle assembly (144) includes a pinion gear assembly and an output gear assembly that provide a gear reduction at the wheel; and optionally wherein the front portal spindle assembly contributes to engine braking during deceleration of the vehicle.

7. The braking system of claim 6, wherein the front portal spindle assembly facilitates utilizing a relatively small brake caliper, a relatively small brake disc, or a combination thereof.

8. A method for a braking system of a vehicle, comprising:
incorporating a front portal spindle assembly (144) into a drivetrain (124) of the vehicle;
fastening a brake caliper (196) to the drivetrain; and
coupling a brake disc (206) with a drive axle comprising the drivetrain.

9. The method of claim 8, wherein incorporating the front portal spindle assembly includes providing a gear reduction at a wheel (120) coupled with the front portal spindle assembly.

10. The method of claim 9, wherein providing the gear reduction includes configuring the front portal spindle assembly to contribute to engine braking during deceleration of the vehicle.

11. The method of claim 10, wherein configuring the front portal spindle assembly includes utilizing a relatively small brake caliper, a relatively small brake disc, or a combination thereof.

12. The method of any of claims 8 to 11, wherein fastening the brake caliper includes fastening the brake caliper to a modular chassis (128) comprising the drivetrain such that the brake disc passes through the brake caliper, or wherein fastening the brake caliper includes mounting the brake caliper between a transaxle and the front portal spindle assembly.

13. The method of claim 14, wherein fastening the brake caliper includes causing a periphery of the brake disc to pass through the brake caliper such that the brake caliper applies pressure to the brake disc upon activation of the braking system to slow rotation of the drive axle.

14. The method of any of claims 8 to 13, wherein coupling the brake disc includes coupling the brake disc with a hub comprising the front differential.

15. The method of claim 4, wherein coupling includes coupling the brake disc with a constant velocity joint that is coupled with the hub of the front differential.
